(19) **Europäisches Patentamt**
**European Patent Office**
**Office européen des brevets**

(11) **EP 2 433 794 B1**

(12) **EUROPEAN PATENT SPECIFICATION**

(45) Date of publication and mention
of the grant of the patent:
**26.12.2018 Bulletin 2018/52**

(51) Int Cl.:
***B32B 5/14*** *(2006.01)*     ***B32B 27/28*** *(2006.01)*
***B32B 7/12*** *(2006.01)*     ***B32B 27/08*** *(2006.01)*
***B32B 27/30*** *(2006.01)*

(21) Application number: **10777763.3**

(22) Date of filing: **18.05.2010**

(86) International application number:
**PCT/JP2010/058376**

(87) International publication number:
**WO 2010/134530 (25.11.2010 Gazette 2010/47)**

(54) **MULTILAYERED STRUCTURE**

MEHRSCHICHTSTRUKTUR

STRUCTURE MULTICOUCHES

(84) Designated Contracting States:
**AL AT BE BG CH CY CZ DE DK EE ES FI FR GB**
**GR HR HU IE IS IT LI LT LU LV MC MK MT NL NO**
**PL PT RO SE SI SK SM TR**

(30) Priority: **18.05.2009 JP 2009119935**

(43) Date of publication of application:
**28.03.2012 Bulletin 2012/13**

(73) Proprietor: **Toyo Seikan Kaisha, Ltd.**
**Shinagawa-ku**
**Tokyo 141-8640 (JP)**

(72) Inventors:
• **ISHIHARA, Takayuki**
**Yokohama-shi**
**Kanagawa 240-0062 (JP)**

• **KIKUCHI, Atsushi**
**Yokohama-shi**
**Kanagawa 240-0062 (JP)**

(74) Representative: **Müller-Boré & Partner**
**Patentanwälte PartG mbB**
**Friedenheimer Brücke 21**
**80639 München (DE)**

(56) References cited:
**EP-A1- 0 628 593**     **EP-A2- 0 372 875**
**JP-A- 8 034 888**     **JP-A- 8 034 889**
**JP-A- 8 269 272**     **JP-A- 2000 296 587**
**JP-A- 2002 241 546**     **JP-A- 2003 192 016**
**JP-A- 2004 010 679**     **JP-A- 2004 182 344**
**JP-A- 2005 119 693**     **US-A- 5 827 615**
**US-A1- 2004 131 868**     **US-A1- 2005 089 701**

## Description

Technical Field:

This invention relates to a multilayered structure having, as an intermediate layer, a layer of a blend of an ethylene/vinyl alcohol copolymer and a maleic anhydride-modified olefin resin and, specifically, to a multilayered structure used for packing.

Background Art:

Polyolefin resin such as polyethylene and polypropylene, and polyester resin as represented by a polyethylene terephthalate, have excellent properties such as formability, transparency, mechanical strength and resistance against chemicals, and have been used as packing materials in a variety of fields.

Here, the ethylene/vinyl alcohol copolymer (saponified product of ethylene/vinyl acetate copolymer) is a known resin having excellent oxygen-barrier property. In the field of packing materials, in particular, a multilayered structure has been placed in wide and practical use by using the above polyolefin resin and the polyester resin as inner and outer layers and using a layer of the ethylene/vinyl alcohol copolymer as an intermediate layer (oxygen-barrier resin layer).

Recently, further, a multilayered structure has also been put into practical use having, as an intermediate layer, an oxygen-absorbing resin layer that contains an oxidizing organic component of an ethylenically unsaturated group-containing polymer (e.g., polybutadiene, etc.) and a transition metal catalyst component such as iron or cobalt, and having an inner layer and an outer layer sandwiching the intermediate layer (see, for example, patent document 1).

Here, the ethylene/vinyl alcohol copolymer has excellent oxygen-barrier property but poorly adheres to other resins. Therefore, an adhesive layer must be provided neighboring the layer of the ethylene/vinyl alcohol copolymer. In the multilayered structure having the oxygen-absorbing resin layer proposed in the above patent document 1, for example, use is made of the ethylene/vinyl alcohol copolymer as a resin substrate of the oxygen-absorbing resin layer to compensate for a decrease in the oxygen-absorbing capability (decrease in the oxygen-barrier property) caused by the aging of the oxygen-absorbing resin layer, and provision is made of the ethylene/vinyl alcohol copolymer layers on both sides of the oxygen-absorbing resin layer. Here, the ethylene/vinyl alcohol copolymer layers are adhered to the inner and outer layers via adhesive layers. Thus, use of the ethylene/vinyl alcohol copolymer requires adhesive layers that do not contribute to improving the functions of the packing material and, further, renders the layer structure to become complex, necessitating the use of an extruder for forming the adhesive layers and driving up the cost of production. Therefore, improvements have been desired.

As a packing material to solve the above problems, a patent document 2 proposes a multilayered structure provided with an intermediate layer of a blend of an ethylene/vinyl alcohol copolymer and a polyester resin.

EP628593 discloses a plastic film with low oxygen permeability comprises at least one oxygen barrier layer formed as a blended resin of a terpolymer of ethylene, an acrylic ester and a third component which is selected from maleic anhydride and glycidyl methacrylate and an oxygen barrier polymer, and its use in a multilayered structure, between a core layer selected from EVA or LLDPE, and a skin layer that is mainly polyolefinic.

Prior Art Documents:

Patent Documents:

Patent document 1: JP-A-2007-320576
Patent document 2: Japanese Patent No. 3788442

Outline of the Invention:

Problems that the Invention is to Solve:

The multilayered structure proposed in the patent document 2 has an advantage in that the intermediate layer by itself which is the blend of the ethylene/vinyl alcohol copolymer and the polyester resin, has oxygen-barrier property as well as adhesive property and, therefore, no particular adhesive layer needs be provided. However, the intermediate layer excellently adheres to the inner and outer layers but only when a polyester resin such as polyethylene terephthalate is used as the inner and outer layers. When a polyolefin resin is used as the inner and outer layers, however, the intermediate layer of the blend does not almost adhere to the inner and outer layers, and delamination easily takes place. In such a case, after all, adhesive layers must be provided.

It can be further contrived to provide an intermediate layer of an ethylene/vinyl alcohol copolymer blended with a polyolefin resin by applying means proposed by the patent document 2. However, the ethylene/vinyl alcohol copolymer and the polyolefin resin are very poorly compatible with each other. Therefore, it is difficult to homogeneously disperse the ethylene/vinyl alcohol copolymer in the blend, and excellent oxygen-barrier property of the ethylene/vinyl alcohol copolymer cannot be exhibited to a sufficient degree. Besides, to attain excellent oxygen-barrier property, the ethylene/vinyl alcohol copolymer must be used in large amounts. In this case, therefore, the adhesiveness decreases to the inner and outer layers (polyolefin resin layers). After all, this means cannot be applied when the inner and outer layers are formed by using the polyolefin resin.

It is, therefore, an object of the present invention to provide a multilayered structure which eliminates the need of providing any particular adhesive layer, enables the ethylene/vinyl alcohol copolymer to exhibit excellent oxygen-barrier property to a sufficient degree, and can be effectively used even when a polyolefin resin is used as the inner and outer layers.

Means for Solving the Problems:

In order to solve the above problems, the present inventors have conducted experiments extensively, have discovered a novel fact that when a blend of an ethylene/vinyl alcohol copolymer and a maleic anhydride-modified olefin resin that is a widely used adhesive, is used as an intermediate layer, and when the two components are distributed in a state of forming a vivid interface, there are exhibited not only excellent -oxygen-barrier property but also excellent adhering property to the inner and outer layers of a polyolefin resin, and have thus completed the invention.

That is, according to the present invention, there is provided a multilayered structure having an adhesive intermediate layer of a blend of an ethylene/vinyl alcohol copolymer (A) and a maleic anhydride-modified olefin resin (B) between an inner layer and an outer layer, the adhesive intermediate layer containing the ethylene/vinyl alcohol copolymer (A) and the maleic anhydride-modified olefin resin (B) at a weight ratio of 4:6 to 8:2, wherein at least either the inner layer or the outer layer is formed of a polyolefin resin; and wherein the ethylene/vinyl alcohol copolymer (A) and the maleic anhydride-modified olefin resin (B) have a viscosity ratio $\eta_{AB}$ defined by the following formula,

$$\eta_{AB} = a/b$$

wherein "a" is a melt viscosity of the ethylene/vinyl alcohol copolymer (A) at 200°C and at a shearing rate of 200 s$^{-1}$, and "b" is a melt viscosity of the maleic anhydride-modified olefin resin (B) at 200°C and at a shearing rate of 200 s$^{-1}$, in a range of 3 to 10.

Effects of the Invention:

The multilayered structure of the invention has a distinct feature on the provision of a layer of a blend of an ethylene/vinyl alcohol copolymer (A) and a maleic anhydride-modified olefin resin (B) between the inner layer and the outer layer. The above layer of the blend serves as an adhesive intermediate layer exhibiting not only excellent oxygen-barrier property of the ethylene/vinyl alcohol copolymer but also excellent adhering property to the inner and outer layers and, specifically, to the inner and outer layers formed of a polyolefin resin. Namely, the multilayered structure of the invention enables the ethylene/vinyl alcohol copolymer to exhibit its excellent oxygen-barrier property without the need of providing any particular adhesive layer for preventing delamination, and can be particularly preferably used as a packing material such as of the containers and caps.

According to the present invention, further, when the adhesive intermediate layer formed between the inner layer and the outer layer is comprised of the ethylene/vinyl alcohol copolymer (A) and the maleic anhydride-modified olefin resin (B) that are so selectively combined together that the viscosity ratio $\eta_{AB}$ defined by the above formula is in a range of 3 to 10, oxygen-barrier property of the ethylene/vinyl alcohol copolymer (A) and adhering property of the maleic anhydride-modified olefin resin (B) are exhibited to a sufficient degree, also making it possible to attain both improved oxygen-barrier property and improved adhering property to the inner and outer layers without the need of providing any particular adhesive layers.

Brief Description of the Drawings:

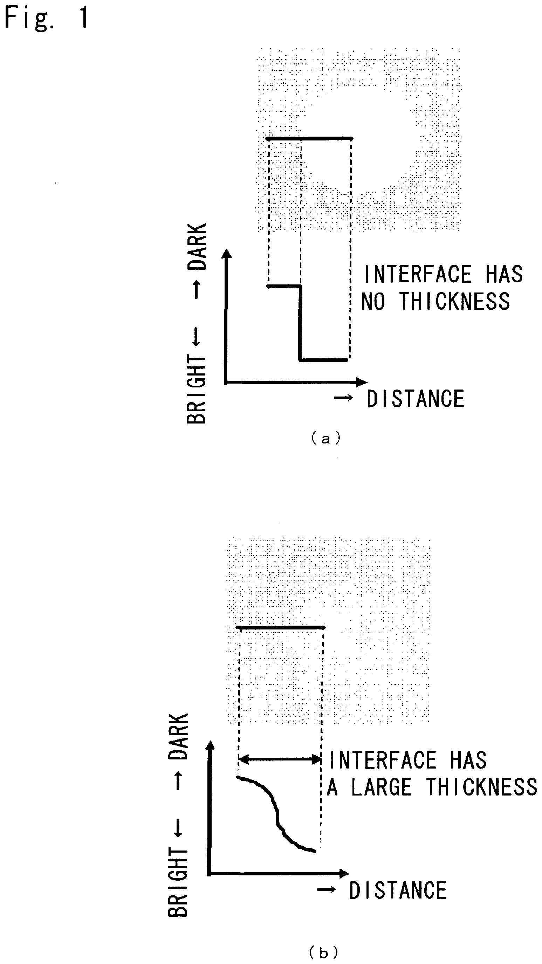

[Fig. 1] shows diagrams schematically illustrating photographs of when the cross section of an intermediate layer of a blend of an ethylene/vinyl alcohol copolymer (A) and a maleic anhydride-modified olefin resin (B) is observed in the direction of thickness, (a) being an example of the present invention and (b) being a comparative example outside the scope of the invention.

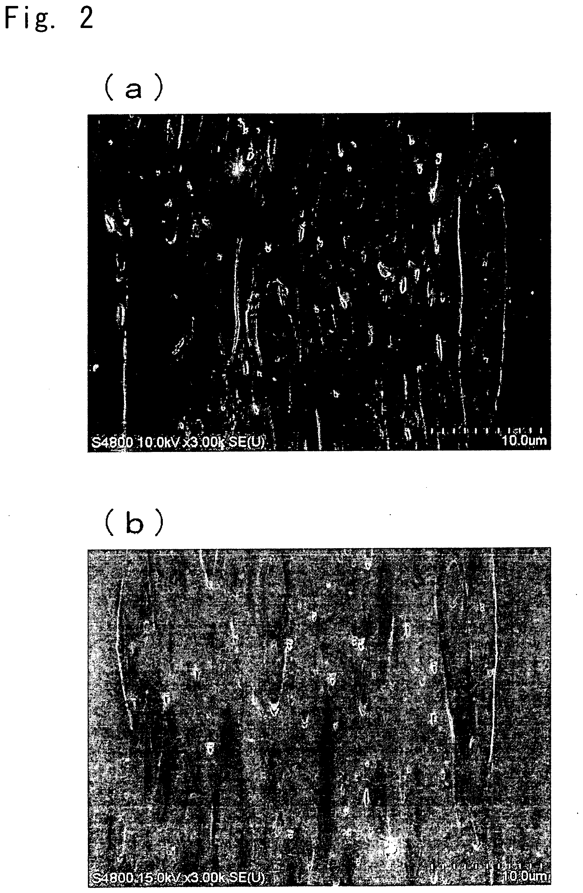

[Fig. 2] shows electron microphotographs illustrating phase structures of the ethylene/vinyl alcohol copolymer and the maleic anhydride-modified olefin resin in the adhesive intermediate layer, (a) being an example of the present invention and (b) being a comparative example outside the scope of the invention.

Mode for Carrying Out the Invention:

<Principle of the Invention>

In the multilayered structure of the invention, an intermediate layer of a blend of an ethylene/vinyl alcohol copolymer (A) and a maleic anhydride-modified olefin resin (B) works as an adhesive intermediate layer which exhibits not only excellent oxygen-barrier property but also excellent adhering property to the inner and outer layers. To realize such oxygen-barrier property and adhering property, the ethylene/vinyl alcohol copolymer (A) and the maleic anhydride-modified olefin resin (B) must be contained at a specific ratio of amounts (4:6 to 8:2) and, besides, the standard deviation must be not less than 65 and, specifically, not less than 70 when a contrast profile of the ethylene/vinyl alcohol copolymer (A) and the maleic anhydride-modified olefin resin (B) in the adhesive intermediate layer near the interface thereof is measured by using a scanning electron microphotograph of the cross section of the multilayered structure the direction of thickness thereof.

In the photographs of phase structures of the above blend, i.e., in Figs. 1(a) and (b) schematically showing photographs observing vicinities of interfaces of the two components, the central bright portion is a portion where the ethylene/vinyl alcohol copolymer (A) is present and the peripheral dark portion is a portion where the maleic anhydride-modified olefin resin (B) is present. In the photographs observing the cross sections, the contrast profile that has a large standard deviation in the direction of thickness as above means that, as shown in Fig. 1(a), brightness and darkness of the two components are clear and the interface is vividly present between the two components. On the other hand, the contrast profile having a standard deviation smaller than the above range means that a difference in the brightness is small between the two components and that, as shown in Fig. 1(b), the interface is not vivid between the two components.

The contrast profile can be measured on the photograph observing the cross section by using an image analysis software.

As will be understood from the above description, the adhesive intermediate layer in the multilayered structure of the invention contains a vivid interface between the two components (A) and (B) as shown in Fig. 1(a). Therefore, as demonstrated in Example 1 appearing later, excellent oxygen-barrier property is exhibited, excellent adhering property is exhibited to the inner and outer layers of the polyolefin resin, and inconvenience such as delamination can be effectively avoided without adhesive layers. On the other hand, despite the intermediate layer is formed by using the blend of the ethylene/vinyl alcohol copolymer (A) and the maleic anhydride-modified olefin resin (B), if the interface is not vivid between the two components (A) and (B) as shown in Fig. 1(b), oxygen-barrier property is not satisfactory as demonstrated in Comparative Example 1 appearing later, and adhering property becomes very low to the inner and outer layers of the polyolefin resin.

The reason has not been clarified yet why excellent gas-barrier property and excellent adhering property to the inner and outer layers are exhibited when the contrast profile of the ethylene/vinyl alcohol copolymer (A) and the maleic anhydride-modified olefin resin (B) has a standard deviation lying in the above range and when a vivid interface is formed between the two components. It is, however, presumed that the presence of a vivid interface between the two components means that the two components are not compatible with each other but are present in an independent form and as a result, both excellent oxygen-barrier property of the ethylene/vinyl alcohol copolymer (A) and properties of the maleic anhydride-modified olefin resin (B) as an adhesive are exhibited to a sufficient degree. That is, when the contrast profile has a small standard deviation and the interface is ambiguous between the two components, it is presumed that the two components are compatible with each other and, as a result, the ethylene/vinyl alcohol copolymer (A) exhibits decreased oxygen-barrier property and the maleic anhydride-modified olefin resin (B) exhibits decreased property as an adhesive.

As described above, further, when the adhesive intermediate layer is formed by so selecting and combining the ethylene/vinyl alcohol copolymer (A) and the maleic anhydride-modified olefin resin (B) that the viscosity ratio $\eta_{AB}$ defined by the above formula is in a range of 3 to 10, a sea-island structure is formed in the adhesive intermediate layer with the maleic anhydride-modified olefin resin (B) as the sea, or a bicontinuous phase structure is formed therein in which both the ethylene/vinyl alcohol copolymer (A) and the maleic anhydride-modified olefin resin (B) are present as continuous phases. As a result, the functions of the two components (A) and (B) are not impaired; i.e., oxygen-barrier property of the ethylene/vinyl alcohol copolymer (A) and adhering property of the maleic anhydride-modified olefin resin (B) are independently exhibited to a sufficient degree. Thus, oxygen-barrier property as well as adhering property to the inner and outer layers can be improved simultaneously without providing any particular adhesive layer.

<Adhesive intermediate layer>

As the ethylene/vinyl alcohol copolymer (A) used for forming the adhesive intermediate layer of the invention, there can be used an ethylene/vinyl alcohol copolymer itself, i.e., the one of a grade that has been used as an oxygen-barrier resin in the field of packing materials excluding, however, the condition related to fluidity that will be described later.

Concretely, there is preferably used a saponified product of a copolymer obtained by saponifying an ethylene/vinyl acetate copolymer having an ethylene content of 20 to 60 mol% and, specifically, 25 to 50 mol% to a saponification degree of not less than 96% and, specifically, not less than 99 mol%. The ethylene/vinyl alcohol copolymer (saponified product of the ethylene/vinyl acetate copolymer) should have a molecular weight large enough for forming a film and, usually, has an intrinsic viscosity of, preferably, not less than 0.01 dl/g and, specifically, not less than 0.05 dl/g as measured in a mixed solvent of phenol/water of a weight ratio of 85/15 at 30°C.

As the maleic anhydride-modified olefin resin which is another component for forming the adhesive intermediate layer, there is used the one that has heretofore been used as an adhesive resin for forming an adhesive layer, such as a graft-modified olefin resin that is graft-modified with maleic anhydride. In this case, as an olefin resin to be graft-modified, there can be preferably used polyethylene, polypropylene or ethylene/$\alpha$-olefin copolymer. From the standpoint of adhering property, further, it is desired that the maleic anhydride-modified olefin resin contains a carbonyl group (>C=O) on the main chain or the side chain in an amount of 1 to 200 meq/100 g of the resin and, specifically, 1 to 50 meq/100 g of the resin.

In order for the adhesive intermediate layer in the multilayered structure of the present invention to exhibit its excellent oxygen-barrier property, the blending ratio (A:B) of the ethylene/vinyl alcohol copolymer (A) and the maleic anhydride-modified olefin resin (B) must be 4:6 to 8:2, preferably, 5:5 to 6:4 and, most preferably, 7: 3 to 8:2 by weight. If the ethylene/vinyl alcohol copolymer (A) is used in an amount larger than the above range, the amount of the maleic anhydride-modified olefin resin (B) decreases. Therefore, even if good oxygen-barrier property is exhibited, adhering property decreases to the inner and outer layers and, specifically, to the polyolefin resin necessitating the provision of adhesive layers for preventing delamination. If the amount of the maleic anhydride-modified olefin resin is larger than the above range, on the other hand, the adhering property to the inner and outer layers is sufficient. However, since the amount of the ethylene/vinyl alcohol copolymer (A) is small, oxygen-barrier property decreases and, after all, the intermediate layer works only as an adhesive layer.

In the invention, further, to obtain adhering property to the inner and outer layers while maintaining the above excellent oxygen-barrier property, it is desired that the adhesive intermediate layer has a blending ratio of the two components in the above predetermined range, and has a sea-island structure with the maleic anhydride-modified olefin resin (B) as the sea, or has a phase structure in which the two components (A) and (B) are continuously distributed like layers (bicontinuous phase structure). In particular, the bicontinuous phase is desired from the standpoint of oxygen-barrier property.

In the invention, further the adhesive intermediate layer having the sea-island structure or the continuous phase structure is formed by so combining the two components together that a viscosity ratio $\eta_{AB}$ defined by the following formula,

$$\eta_{AB} = a/b$$

wherein "a" is a melt viscosity of the ethylene/vinyl alcohol copolymer (A) at 200°C and at a shearing rate of 200 s$^{-1}$, and "b" is a melt viscosity of the maleic anhydride-modified olefin resin (B) at 200°C and at a shearing rate of 200 s$^{-1}$, lies in a range of 3 to 10 and, specifically, 3 to 7. That is, upon combining the two components together so as to obtain the above fluidity, each component does not lose oxygen-barrier property or adhering property at the time when the blend is extruded or injected to form the adhesive intermediate layer. Thus, there is easily formed either the sea-island structure with the maleic anhydride-modified olefin resin (B) as the sea or the distributed structure in which both component are continuing like layers.

Here, in the adhesive intermediate layer of the invention, the contrast profile of the ethylene/vinyl alcohol copolymer (A) and the maleic anhydride-modified olefin resin (B) has a standard deviation lying in a predetermined range, and a vivid interface is formed between the two components enabling adhering property to the inner and outer layers and oxygen-barrier property to be further improved. For this purpose, the ethylene/vinyl alcohol copolymer (A) and the maleic anhydride-modified olefin resin (B) should be so selected as to satisfy the above ratio of amounts and the viscosity ratio $\eta_{AB}$. At the same time, it is necessary to maintain relatively low the forming temperature and, specifically, the melt-kneading temperature in the cylinder of the extruder, heat due to shearing and the die temperature. If forming is conducted under a condition where excess of temperature is added, the ethylene/vinyl alcohol copolymer (A) and the maleic anhydride-modified olefin resin (B) become highly reactive in the extruder and become compatible with each other. Therefore, the standard deviation decreases in the contrast profile, the interface becomes ambiguous between the two components and, as a result, adhering property to the inner and outer layers and oxygen-barrier property are not improved any further.

Further, the acid-modified ratio of the maleic anhydride-modified olefin resin (B) greatly affects the adhering property. Generally, therefore, it is desired that the maleic anhydride-modified olefin resin (B) that is used has a carbonyl group (>C=O) on the main chain or the side chain thereof in an amount of 1 to 200 meq/100 g of the resin and, specifically, 1 to 50 meq/100 g of the resin (i.e., corresponds to the acid-modified ratio). If the modified ratio is higher than the above range, the reactivity increases and there occur such problems as a decrease in the adhering property and occurrence of gel and lumps. If the modification ratio is lower than the above range, the function as the adhesive agent decreases.

The adhesive intermediate layer may, as required, be blended with additives such as dispersing agent and the like for maintaining transparency and formability within a range in which they do not impair the adhering property and oxygen-barrier property.

<Inner and outer layers>

In the multilayered structure of the invention, at least either the inner or the outer layer is formed of a polyolefin resin. That is, in the invention, when the inner and outer layers are formed by using the polyolefin resin, the ethylene/vinyl alcohol copolymer which does not almost adhere to the polyolefin resin exhibits excellent oxygen-barrier property effectively without using any particular adhesive layer and without causing such inconvenience as delamination. Thus, excellent effect of the present invention can be exhibited to a maximum degree.

As the polyolefin resins, there can be exemplified such polyethylenes as low-density polyethylene (LDPE), medium-density polyethylene (MDPE), high-density polyethylene (HDPE), linear low-density polyethylene (LLDPE) and linear very low-density polyethylene (LVLDPE); and polypropylene, ethylene/propylene copolymer, polybutene-1, ethylene/butene-1 copolymer, propylene/butene-1 copolymer, ethylene/propylene/butene-1 copolymer, ethylene/vinyl acetate copolymer and ionically crosslinked olefin copolymer (ionomer).

The above various kinds of resins for forming the inner and outer layers may be those of the extrusion grade or the injection grade that have heretofore been used in the field of packing materials. Particularly, to suppress the occurrence of flow marks at the time of forming multiplicity of layers, it is desired to select a resin having a viscosity comparable to that of the neighboring layers.

The inner layer and the outer layer do not have to be formed by using the resin of the same kind. For instance, the outer layer may be formed by using the above polyester resin and the inner layer may be formed by using the polyolefin resin, as a matter of course. As required, further, the inner and outer layers may be blended with lubricant, reforming agent, pigment, ultraviolet ray absorber, etc.

<Layer structure of the multilayered structure>

The multilayered structure of the present invention may assume any layered structure so far as the above-mentioned adhesive intermediate layer is provided between the inner layer and the outer layer, and may assume a layered structure suited for the use. Among them, the simplest layered structure will be a three-layered structure comprising;
inner layer/adhesive intermediate layer/outer layer.

To further improve the oxygen-barrier property, however, the structure is desirably provided with a gas shut-off intermediate layer and is, specifically, a five-layered structure comprising;
inner layer/adhesive intermediate layer/gas shut-off intermediate layer/adhesive intermediate layer/outer layer.

In the above five-layered structure, the gas shut-off layer will be an oxygen-barrier resin layer or an oxygen-absorbing resin layer.

The oxygen-barrier resin forming the oxygen-barrier resin layer will be represented by the above ethylene/vinyl alcohol copolymer. In particular, the oxygen-barrier resin layer formed by using the ethylene/vinyl alcohol copolymer has the highest adhering property to the above-mentioned adhesive intermediate layer and is very desired. The ethylene/vinyl alcohol copolymer may be the same as the ethylene/vinyl alcohol copolymer used for forming the adhesive intermediate layer.

As the oxygen-barrier resins other than the ethylene/vinyl alcohol copolymer, there can be exemplified polyamides such as nylon 6, nylon 6 · 6, nylon 6/6 · 6 copolymer, metaxylenediadipamide (MXD6), nylon 6 · 10, nylon 11, nylon 12 and nylon 13. Among these polyamides, there are preferably used the ones having amide groups in a number in a range of 5 to 50 and, specifically, 6 to 20 per 100 carbon atoms, since it has high oxygen-barrier property. These polyamides, too, should have molecular weights large enough for forming a film, and should, desirably, have relative viscosities of not less than 1.1 and, specifically, not less than 1.5 as measured in, for example, concentrated sulfuric acid (concentration of 1.0 g/dl) at 30°C.

The oxygen-absorbing resin layer contains an oxidizing organic component and a transition metal catalyst component, the oxidizing organic component and the transition metal catalyst being dispersed in a base resin, and may be the known one disclosed in the above patent document 1. That is, by being oxidized upon absorbing oxygen, the oxidizing organic component exhibits the function of shutting off the oxygen, while the transition metal catalyst component is added to promote the oxidation of the oxidizing organic component.

As the oxidizing organic component, there can be exemplified an ethylenically unsaturated group-containing polymer. The polymer has a carbon-carbon double bond. The double-bonded moiety is easily oxidized to absorb and trap oxygen.

The ethylenically unsaturated group-containing polymer is derived by using, for example, polyene as a monomer. As preferred polyene used as the monomer, though not limited thereto only, there can be exemplified the following compounds.

Conjugated dienes such as butadiene and isoprene;

Chain non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene;
Cyclic non-conjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene;
Trienes such as 2,3-diisopropylidene-5-norbornene, 2-ethylidene-3-isopropylidene-5-norbornene, 2-propenyl-2,2-norbornadiene; and chloroprene.

Namely, there can be used a homopolymer of the above polyene, a random copolymer of two or more kinds of the above polyenes in combination or in further combination thereof with other monomers, or block copolymers thereof as oxidizing polymers.

As other monomers to be copolymerized with the above polyenes, there can be exemplified $\alpha$-olefins having 2 to 20 carbon atoms, concretely, ethylene, propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. In addition to the above, there can be further used styrene, vinyltriene, acrylonitrile, methacrylonitrile, vinyl acetate, methyl methacrylate and ethyl acrylate.

As the oxidizing organic components, among the polymers derived from the above polyenes, there can be preferably used polybutadiene (BR), polyisoprene (IR), natural rubber, nitrile-butadiene rubber (NBR), styrene-butadiene rubber (SBR), chloroprene rubber and ethylene-propylene-diene rubber (EPDM) though not limited thereto only. It is desired that the oxidizing organic components have iodine values of not less than 100 and, specifically, about 120 to 196.

In addition to the above ethylenically unsaturated group-containing polymers, there can be used, as oxidizing organic components, polymers that are easily oxidized by themselves, such as polypropylene, ethylene/carbon oxide copolymer, and the like.

From the standpoint of formability, it is desired that the above-mentioned oxidizing polymers and copolymers thereof have viscosities in a range of 1 to 200 Pa · s at 40°C.

As described earlier, the transition metal catalyst is used for promoting the oxidation of the oxidizing organic components, and is used in the form of an inorganic salt of a transition metal of a low valence number, an organic salt thereof or a complex salt thereof.

In the fibrous metal catalyst, the transition metal is, preferably, a metal of the Group VIII of periodic table, such as iron, cobalt or nickel, and may, further, be a metal of the Group I, such as copper or silver, a metal of the Group IV, such as tin, titanium or zirconium, a metal of the Group V, such as vanadium, a metal of the Group VI, such as chromium, or a metal of the Group VIII, such as manganese. Among them, cobalt is particularly desired since it markedly promotes oxygen-absorbing property (oxidation of oxidizing organic components).

As the inorganic salts of the above transition metals, there can be exemplified halides such as chlorides, oxysalts of sulfur such as sulfates, oxyacid salts of nitrogen such as nitrates, phosphorus oxysalts such as phosphates, and silicates.

As the organic salts of the transition metals, there can be exemplified carboxylates, sulfonates and phosphonates. To attain the object of the invention, however, carboxylates are preferred. Concrete examples thereof include transition metal salts of acetic acid, propionic acid, isopropionic acid, butanoic acid, isobutanoic acid, pentanoic acid, hexanoic acid, heptanoic acid, isoheptanoic acid, octanoic acid, 2-ethylhexanoic acid, nonanoic acid, 3,5,5-trimethylhexanoic acid, decanoic aid, neodecanoic acid, undecanoic acid, lauric acid, myristic acid, palmitic acid, margalic acid, stearic acid, arachic acid, linderic acid, tsuzuic acid, petroselinic acid, oleic acid, linolic acid, linoleic acid, arachidonic acid, formic acid, oxalic acid, sulfamic acid and naphthenic acid.

As the complexes of the transition metals, there can be exemplified complexes with $\beta$-diketone or $\beta$-keto-acid ester. As the $\beta$-diketone or $\beta$-keto-acid ester, there can be exemplified the following compounds.

Acetylacetone,

ethyl acetoacetate,
1,3-cyclohexadion,
methylenebis-1,3-cyclohexadion,
2-benzyl-1,3-cyclohexadion,
acetyltetralone,
palmitoyltetralone,
stealoyltetralone,
benzoyltetralone,
2-acetylcyclohexanone,
2-benzoylcyclohexanone,
2-acetyl-1,3-cyclohexadion,
benzoyl-p-chlorobenzoylmethane,
bis(4-methylbenzoyl)methane,
bis(2-hydroxybenzoyl)methane,
benzoylacetone,
tribenzoylmethane,
diacetylbenzoylmethane,
stearoylbenzoylmethane,
palmitoylbenzoylmethane,
lauroylbenzoylmethane,
dibenzoylmethane,
bis(4-chlorobenzoyl)methane,
benzoylacetylphenylmethane,
stearoyl(4-methoxybenzoyl)methane,
butanoylacetone,
distearoylmethane,
stearoylacetone,
bis(cyclohexanoyl)methane, and
dipivaloylmethane.

As the base resin in which the above oxidizing organic component and the transition metal catalyst are dispersed, there can be used any thermoplastic resin. The above-mentioned ethylene/vinyl alcohol copolymer, however, is preferred. That is, by using the ethylene/vinyl alcohol copolymer as the base resin, the oxygen-barrier property of the layer can be further enhanced and, at the same time, adhering property to the adhesive intermediate layer can be enhanced, too.

In the oxygen-absorbing resin layer, the oxidizing organic component is used desirably in an amount of 1 to 15% by weight and, specifically, 2 to 10% by weight with respect to the ethylene/vinyl alcohol copolymer which is the base resin, and the transition metal catalyst is blended desirably in an amount of 10 to 1000 ppm and, specifically, 50 to 500 ppm calculated as a metal.

In the multilayered structure of the invention having the above layer structure, it is particularly desired that the structure includes the oxygen-absorbing resin layer as a gas shut-off layer. That is, in the oxygen-absorbing resin layer, the oxygen-absorbing capability decreases accompanying the oxidation of the oxidizing organic component and, therefore, the oxygen-barrier property decreases. However, since the adhesive intermediate layers have been provided neighboring the oxygen-absorbing resin layer, the oxygen-barrier property possessed by the adhesive intermediate layers compensates for a decrease in the oxygen-barrier property of the oxygen-absorbing resin layer, and excellent oxygen-barrier property can be maintained for extended period of time.

In the oxygen-absorbing resin layer, oxidation of the oxidizing organic component is accompanied by the formation of low molecular components such as aldehyde and the like which could become a cause of odor and coloring. When the multilayered structure is used as a container, in particular, flavor of the content in the container is often lowered. In the embodiment provided with the oxygen-absorbing resin layer, therefore, it is desired that an odor-trapping agent is contained in the inner and outer layers and, specifically, in the inner layer.

As the odor-trapping agent, there can be preferably used a porous inorganic material comprising chiefly silicate, e.g., a powder of activated clay obtained by treating a smectite clay mineral such as zeolite or montmorillonite with an acid. In particular, high silica zeolite (silica/alumina ratio of not less than 100) which is of the Na-ZSM5 crystal type exhibits excellent property for trapping the so-called polymer odor specific to the plastic materials and by-products formed by the oxidation thereof. The odor-trapping agent is, usually, contained in the inner layer (or in the outer layer) in an amount of 0.5 to 10% by weight.

By utilizing excellent adhering property possessed by the adhesive intermediate layer, further, the multilayered structure of the present invention may be provided with a regrind layer to reuse the resources. The regrind layer is obtained by blending a virgin resin for forming the inner and outer layers with a scrap resin of the same kind as the resin of the inner and outer layers generated at the time of forming the inner and outer layers or at the time of forming the containers. Usually, the regrind layer is provided between the inner/outer layers and the adhesive intermediate layer and, particularly, between the inner layer and the adhesive intermediate layer in the above-mentioned various layered structures.

In the above various layered structures, the thicknesses of the layers may be suitably set depending upon the use of the multilayered structures so that properties of the layers are exhibited to a sufficient degree.

The multilayered structure of the invention is suited for use as a packing material, and can be used, for example, as packing films or sheets, caps and containers (bottles and cup-like containers etc.).

The multilayered structure can be formed under the conditions known per se. with the exception of employing the forming conditions for forming a predetermined contrast profile in the adhesive intermediate layer and forming a vivid interface between the two components. For example, by using extruders or injection machines of a number corresponding to the number of the layers, there is formed a film or sheet, cap or a preform for a container by coextrusion or coinjection, and the preform is, thereafter, formed into a bottle or a cup-like container through the secondary forming such as blow forming or plug-assisted forming.

The invention is particularly effective for those of which the inner and outer layers are formed of a polyolefin resin, exhibiting excellent humidity resistance possessed by the polyolefin resin and excellent oxygen-barrier property. By utilizing such properties, the invention can be applied to the packing materials such as containers for containing a variety of contents that are subject to be deteriorated by the presence of oxygen, such as beverages like beer, wine, fruit juices, carbonated soft drinks, and fruits, nuts, vegetables, meat products, infant's foods, coffee, jam, mayonnaise, ketchups, edible oils, dressings, sauces, food boiled down in soy, milk products, as well as medicines, cosmetics, gasoline and the like.

Further, the multilayered structure of the invention has excellent transparency and can also be favorably used for the packing containers that require transparency.

EXAMPLES

The present invention will be further described by way of Examples to which only, however, the invention is in no way limited.

1. Preparation method.

[Preparation of an oxygen-absorbing resin composition]

There were provided an ethylene/vinyl alcohol copolymer (EVOH, EP-F171B manufactured by Kuraray Co.) as the base resin, cobalt neodecanoate (cobalt content of 14% by weight, DICANATE 5000 manufactured by Dainihon Ink Kagaku Kogyo Co.) as the transition metal catalyst, and a maleic anhydride-modified polybutadiene (acid value of 29 g KOH/g, RICON 131 MA5 manufactured by Sartomer Co.).

Pellets of the above base resin and the transition metal catalyst were mixed together by using a tumbler so that the transition metal catalyst was homogeneously adhered in an amount of 350 ppm calculated as cobalt on the surfaces of the base resin pellets to thereby obtain catalyst pellets.

Next, by using a biaxial extruder (TEM-35B manufactured by Toshiba Kikai Co.) equipped with a strand die at an outlet portion thereof, the catalyst pellets were melt-kneaded at a screw rotational speed of 100 rpm and a forming temperature of 200°C and, at the same time, the maleic anhydride-modified polybutadiene was added thereto dropwise by using a liquid feeder in a manner that the amount thereof was 5% by weight relative to the catalyst pellets. The mixture thereof was extruded through the strand die to prepare an oxygen-absorbing resin composition.

[Preparation of a deodorant-blended resin composition]

By using the biaxial extruder (TEM-35B manufactured by Toshiba Kikai Co.), a polypropylene was melt-kneaded at a screw rotational speed of 100 rpm and a forming temperature of 200°C. By using a powder feeder, a synthetic zeolite (Na-ZSM5 type manufactured by Mizusawa Kagaku Kogyo Co.) was added to the polypropylene in an amount of 5% by weight relative to the polypropylene, and the mixture was extruded to prepare a deodorant-blended resin composition.

As the polypropylene, there was used B251VT manufactured by Prime Polymer Co.

Measuring method.

[Measurement of viscosities]

The ethylene/vinyl alcohol copolymer (hereinafter abbreviated as EVOH) and the maleic anhydride-modified olefin resin (hereinafter abbreviated as AD) used for the adhesive intermediate layer were measured for their melt viscosities by using a capillograph (manufactured by Toyo Seiki Co.) at a capillary L/D = 10/1 (mm) and a cylinder temperature of 200°C.

[Calculation of the viscosity ratio]

A melt viscosity at 200 s$^{-1}$ corresponding to the strain rate in the direct blow forming was read out from a curve of melt viscosities obtained by the above measurement of viscosities, and a viscosity ratio $\eta_{AB}$ was calculated by using the following formula,

$$\eta_{AB} = a/b$$

a: melt viscosity of EVOH at 200°C and at a shearing rate of 200 s$^{-1}$,
b: melt viscosity of AD at 200°C and at a shearing rate of 200 s$^{-1}$.

Evaluating method.

[Standard deviation in the contrast profile]

The body portion of the prepared multilayered structure was cut by using a cutter into a square of 1 x 1 cm and was cut in the direction of thickness thereof by using an ultramicrotome (2050 SUPERCUTS manufactured by Leica Co.) under a condition of -100°C to obtain a smooth cross section. Next, by using an ion-sputtering apparatus (E-1045 manufactured by Hitachi High Technologies Co.), the vacuum evaporation was conducted under the conditions of a distance of 3 cm between the sample surface and the sputtering apparatus, an output of 15 mA and a vacuum evaporation time of 15 seconds. The vacuum evaporated surface was observed by using a scanning electron microscope (S-4800 manufactured by Hitachi High Technologies Co.), and the phase structure of the adhesive intermediate layer was photographed at an acceleration voltage of 5 kV and a magnification of 3000 times.
By using the Adobe Photoshop Elements ver2.0, the obtained photograph was standardized by a command "image → color tone correction → equalize" on the software screen. This was a processing in which the darkest pixels in the photograph were set to be 0, the whitest pixels were set to be 255, and the whole image was gradated in a range of 0 to 255 to compare the contrast profiles near the interface under the same condition.
Next, by using an image analysis software WINROOF ver6 (produced by Mitsuya Shoji Co.), the contrast profiles near the interface of EVOH and AD in the adhesive intermediate layer were numerically expressed by a command "measurement → manual measurement → measurement of concentration in cross section" on the software screen to find standard deviations.
The image was analyzed at 10 places to equalize the standard deviations, and the values of not less than 65 were denoted by ○ and the values of less than 65 were denoted by ×.
When the interface was clear, the boundary was vivid between the EVOH (white portions) and the AD (dark portions), and the contrast profile was broad. When the interface was not clear, on the other hand, the boundary was not vivid, and the contrast profile was narrow. In the present invention, a value of standard deviation was used as an index for representing the width of the contrast profile.

[Evaluating the oxygen-barrier property]

The prepared multilayered structure was introduced into a globe box and was substituted with nitrogen. Next, 1 cc of distilled water was introduced into the multilayered structure, and was heat-sealed therein with a covering member of an aluminum foil as a barrier layer. The multilayered structure was subjected to the hot water shower-type wet-heat sterilization at 123°C for 30 minutes, and was preserved under a condition of 30°C-80%RH for one week. After preserved, the oxygen concentration in the multilayered structure was measured by the gas chromatography (GC-8A manufactured by Shimazu Co.) to evaluate the oxygen-barrier property.
With the oxygen concentration of 1.5% in the container that deteriorates the quality of the content susceptible to oxygen as a reference, the concentrations of less than 1.0% were represented by ◎, the concentrations of not less than 1.0% but less than 1.5% were represented by ○, and the concentrations of not less than 1.5% were represented by ×.

[Evaluating the delamination]

The body portion of the prepared multilayered structure was cut by using a cutter into a piece of 3 x 3 cm and was evaluated if the end thereof was delaminated. The pieces that were not delaminated were represented by ○ and the pieces that were delaminated were represented by ×.

[Sensory evaluation]

The prepared multilayered structure was introduced into a globe box and was substituted with nitrogen. Next, 1 cc of distilled water was introduced into the multilayered structure, and was heat-sealed therein with a covering member of an aluminum foil as a barrier layer. The multilayered structure was subjected to the hot water shower-type wet-heat sterilization at 123°C for 30 minutes, and was preserved under a condition of 30°C-80%RH for one week. After preserved, the mouth portion of the container was opened and was performed sensory evaluation by panellers.

 ◎: almost odorless.
 ○: slight smell of odor (polymer odor)
 ×: strong smell of odor (offensive odor)

(Example 1)

By using a direct blow-forming machine, a multilayered structure of the shape of a wide-mouth bottle (mouth diameter of 44 mm, volume of 125 cc) was prepared under the conditions of a shell diameter of 15 mm, core diameter of 13 mm and a forming temperature of 200°C.
The layer constitution consisted of 6 layers of 4 kinds (container outer side: polypropylene layer, 50 $\mu$m/adhesive intermediate layer, 25 $\mu$m/EVOH layer, 35 $\mu$m/adhesive intermediate layer, 25 $\mu$m/ regrind layer, 300 $\mu$m/polypropylene layer, 250 $\mu$m: container inner side).
The resins that were used were the polypropylene (B251VT manufactured by Prime Polymer Co.) and the EVOH (Evar EP-F171B manufactured by Kuraray Co.), and the adhesive intermediate layer was formed by using a blended resin of the EVOH and the AD (Adomer QE840 manufactured by Mitsui Kagaku Co.) dry-blended at a weight ratio of 7:3.
Further, the above-mentioned viscosities were measured to be a = 1620 Pa · s, b = 450 Pa · s, and $\eta_{AB}$ = 3.6.
Though it was attempted to measure the acid-modified ratio of the AD relying on $^1$H-NMR, the peak intensity was so weak that the determination could not be correctly attained. From the peak area, however, the acid-modified ratio of the AD was estimated to be not more than 3.6 meq/100 g.
The formed multilayered structure was found for its standard deviation relying on the above evaluation method, was evaluated for its oxygen-barrier property and delamination, and was performed its sensory evaluation.

(Example 2)

A multilayered structure was formed in the same manner as in Example 1 but changing the ratio of blending the resins used for the adhesive intermediate layer into 5:5. The multilayered structure was found for its standard deviation, was evaluated for its oxygen-barrier property and delamination, and was performed its sensory evaluation, and the results are obtained as shown in Table 1.

(Example 3)

A multilayered structure was formed in the same manner as in Example 1 but using the Adomer QE850 manufactured by Mitsui Kagaku Co. instead of using the maleic anhydride-modified olefin resin (AD), and forming the adhesive intermediate layer by using a blended resin of the EVOH and the AD (blending ratio of 7:3) in the same manner as in Example 1. The multilayered structure was found for its standard deviation, was evaluated for its oxygen-barrier property and delamination, and was performed its sensory evaluation, and the results are obtained as shown in Table 1.
The viscosity of the AD was measured to be b = 320 Pa · s and $\eta_{AB}$ = 5.1.
Though it was attempted to measure the acid-modified ratio of the AD relying on $^1$H-NMR, the peak intensity was so weak that the determination could not be correctly attained. From the peak area, however, the acid-modified ratio of the AD was estimated to be not more than 3.6 meq/100 g.

(Example 4)

A multilayered structure was formed in the same manner as in Example 1 but forming a layer of an oxygen-absorbing resin composition (oxygen-absorbing layer) containing an oxygen absorber instead of forming the EVOH layer.

That is, the layer constitution consisted of 6 layers of 4 kinds (container outer side: polypropylene layer, 50 $\mu$m/adhesive intermediate layer, 25 $\mu$m/oxygen-absorbing resin layer, 35 $\mu$m/adhesive intermediate layer, 25 $\mu$m/ regrind layer, 300 $\mu$m/polypropylene layer, 250 $\mu$m: container inner side).

The formed multilayered structure was evaluated for its oxygen-barrier property and delamination, and was performed its sensory evaluation, and the results are obtained as shown in Table 1.

(Example 5)

By using a sheet-forming machine, a multilayered sheet was formed under a condition of a forming temperature of 230°C. Further, by using a plug-assisted vacuum/compressed-air forming machine, a multilayered cup was formed.

The layer constitution of the multilayered sheet that was used consisted of 6 layers of 5 kinds (outer side: polypropylene layer, 400 $\mu$m/adhesive intermediate layer, 70 $\mu$m/oxygen-absorbing resin composition layer, 60 $\mu$m/adhesive intermediate layer, 70 $\mu$m/regrind layer, 600 $\mu$m/deodorant-blended resin layer, 300 $\mu$m: inner side), and the total sheet thickness was 1500 $\mu$m.

The adhesive intermediate layer was formed by using a blended resin of the EVOH and the AD (Adomer QE840 manufactured by Mitsui Kagaku Co.) dry-blended at a weight ratio of 6:4.

The above multilayered sheet was cut into a square of 30 cm and, thereafter, the inner and outer layers thereof were heated at 190°C by using a far infrared ray heater. By using the plug-assisted vacuum/compressed-air forming machine, the multilayered sheet was melt-formed at a stretching ratio of H/D = 0.8 into a cup of the multilayered structure having a full-filled volume of 180 ml.

The formed multilayered cup was evaluated for its oxygen-barrier property and delamination, and was performed its sensory evaluation, and the results are obtained as shown in Table 1.

(Example 6)

A multilayered cup having a container weight of 6.0 g and a fully-filled volume of 66 ml was formed by a multilayer compression-forming method by extruding various materials using an extruder, setting and compression-forming a molten resin mass (drop) that was cut in a compression metal mold.

The layer constitution and the layers of the body portion of the cup consisted of 5 layers of 3 kinds (outer side: deodorant-blended resin layer, 215 $\mu$m/adhesive intermediate layer, 20 $\mu$m/oxygen-absorbing resin composition layer, 30 $\mu$m/adhesive intermediate layer, 20 $\mu$m/deodorant-blended resin layer, 215 $\mu$m: inner side).

The adhesive intermediate layer was formed by using a blended resin of the EVOH and the AD (maleic anhydride-modified olefin resin, Adomer QF-551, manufactured by Mitsui Kagaku Co.) dry-blended at a weight ratio of 5:5.

The formed multilayered cup was evaluated for its oxygen-barrier property and delamination, and was performed its sensory evaluation, and the results are obtained as shown in Table 1.

(Comparative Example 1)

A multilayered structure was formed in the same manner as in Example 1 but using the Adomer QB550 for forming the adhesive intermediate layer instead of using the AD, and was found for its standard deviation, evaluated for its oxygen-barrier property and delamination and was, further, functionally evaluated to obtain results as shown in Table 1.

Observation of the cross section of the multilayered structure through a microscope revealed that the EVOH and the AD were compatible with each other in the adhesive intermediate layer and were forming continuous phases.

Further, the viscosity of the AD was measured to be b = 750 Pa · s and $\eta_{AB}$ = 2.2.

Though it was attempted to measure the acid-modified ratio of the AD relying on $^1$H-NMR, the peak intensity was so weak that the determination could not be correctly attained. From the peak area, however, the acid-modified ratio of the AD was estimated to be not more than 3.6 meq/100 g.

(Comparative Example 2)

A multilayered structure was formed in the same manner as in Example 1 but without using the AD for forming the adhesive intermediate layer. The multilayered structure was evaluated for its oxygen-barrier property and delamination, and was performed its sensory evaluation, and the results are obtained as shown in Table 1.

(Comparative Example 3)

A multilayered structure was formed in the same manner as in Example 1 but without using the EVOH for forming the adhesive intermediate layer. The multilayerd structure was found for its standard deviation, was evaluated for its oxygen-barrier property and delamination, and was performed its sensory evaluation, and the results are obtained as shown in Table 1.

(Comparative Example 4)

A multilayered structure was formed in the same manner as in Example 1 but changing the blending ratio of the blended resin used for forming the adhesive intermediate layer into 3:7. The multilayered structure was found for its standard deviation, was evaluated for its oxygen-barrier property and delamination, and was performed its sensory evaluation, and the results are obtained as shown in Table 1.

(Comparative Example 5)

A multilayered structure was formed in the same manner as in Example 1 but changing the blending ratio of the blended resin used for forming the adhesive intermediate layer into 9:1. The multilayered structure was found for its standard deviation, was evaluated for its oxygen-barrier property and delamination, and was performed its sensory evaluation, and the results are obtained as shown in Table 1.

Table 1

| | | Viscosity of EVOH a (Pa·s) | Viscosity of AD a (Pa·s) | Viscosity ratio (EVOH/AD) $\eta_{AB}$ | Blending ratio EVOH: AD | Oxygen-absorbing layer | Deodorant layer | Form of multilayered structure |
|---|---|---|---|---|---|---|---|---|
| | Ex. 1 | 1620 | 450 | 3,6 | 7:3 | no | no | bottle |
| | Ex. 2 | 1620 | 450 | 3,6 | 5:5 | no | no | bottle |
| | Ex. 3 | 1620 | 320 | 5,1 | 7:3 | no | no | bottle |
| | Ex. 4 | 1620 | 450 | 3,6 | 7:3 | yes | no | bottle |
| | Ex. 5 | 1620 | 450 | 3,6 | 6:4 | yes | yes | cup |
| | Ex. 6 | 1620 | 450 | 3,6 | 5:5 | yes | yes | cup |
| | Comp. Ex. 1 | 1620 | 750 | 2,2 | 7:3 | no | no | bottle |
| | Comp. Ex. 2 | 1620 | - | - | 10:0 | no | no | bottle |
| | Comp. Ex. 3 | - | 450 | - | 0:10 | no | no | bottle |
| | Comp. Ex. 4 | 1620 | 450 | 3,6 | 3:7 | no | no | bottle |
| | Comp. Ex. 5 | 1620 | 450 | 3,6 | 9:1 | no | no | bottle |

| | | Standard deviation | Oxygen-barrier property | Evaluation of delamination | Sensory evaluation |
|---|---|---|---|---|---|
| | Ex. 1 | ○ (86.1) | ○ (1.15) | ○ | ○ |
| | Ex. 2 | ○ (70:2) | ○ (1.30) | ○ | ○ |
| | Ex. 3 | ○ (78.9) | ○ (1.15) | ○ | ○ |
| | Ex. 4 | ○ (86.1) | ◎ (0.90) | ○ | × |
| | Ex. 5 | ○ (78.2) | ◎ (0.90) | ○ | ◎ |
| | Ex. 6 | ○ (89.3) | ◎ (0.48) | ○ | ◎ |
| | Comp. Ex. 1 | × (63.3) | × (1.75) | × | ○ |
| | Comp. Ex. 2 | - | × (20.5) | × | ○ |

(continued)

|  | Standard deviation | Oxygen-barrier property | Evaluation of delamination | Sensory evaluation |
|---|---|---|---|---|
| Comp. Ex. 3 | - | × (1.80) | ○ | ○ |
| Comp. Ex. 4 | not measured | × (1.50) | ○ | ○ |
| Comp. Ex. 5 | × (45.2) | × (20.5) | × | ○ |

As will be learned from Table 1, the delamination and barrier property are affected by the viscosity and blending ratio of the blended resin used for forming the adhesive intermediate layer. This is due to the phase structure of the adhesive intermediate layer; i.e., when the interface between the EVOH and the AD is vivid or when the standard deviation is not less than 65, a good oxygen-barrier property is obtained without delamination. By using the oxygen-absorbing resin in the intermediate layer, further, a high oxygen-barrier property is maintained even after the retort treatment. Upon providing the innermost layer with the deodorant layer, further, it was confirmed by the sensory evaluation that the so-called polymer odor specific to plastics and odor stemming from the oxidized byproducts accompanying the absorption of oxygen could be decreased.

## Claims

1. A multilayered structure having an adhesive intermediate layer of a blend of an ethylene/vinyl alcohol copolymer (A) and a maleic anhydride-modified olefin resin (B) between an inner layer and an outer layer, wherein said adhesive intermediate layer contains the ethylene/vinyl alcohol copolymer (A) and the maleic anhydride-modified olefin resin (B) at a weight ratio of 4:6 to 8:2, and said ethylene/vinyl alcohol copolymer (A) and said maleic anhydride-modified olefin resin (B) have a viscosity ratio $\eta_{AB}$ defined by the following formula,

$$\eta_{AB} = a/b$$

wherein "a" is a melt viscosity of the ethylene/vinyl alcohol copolymer (A) at 200°C and at a shearing rate of 200 $s^{-1}$, and "b" is a melt viscosity of the maleic anhydride-modified olefin resin (B) at 200°C and at a shearing rate of 200 $s^{-1}$,
in a range of 3 to 10, and
wherein at least either the inner layer or the outer layer is formed of a polyolefin resin.

2. The multilayered structure according to claim 1 , said adhesive intermediate layer consisting of the ethylene/vinyl alcohol copolymer (A) and the maleic anhydride-modified olefin resin (B), and having a standard deviation of not less than 65 when a contrast profile of the ethylene/vinyl alcohol copolymer (A) and the maleic anhydride-modified olefin resin (B) in the adhesive intermediate layer near an interface thereof is numerically expressed on a scanning electron microphotograph of the cross section of the multilayered structure in a direction of thickness by using an image analysis software,
wherein a gas shut-off intermediate layer comprising an oxygen-absorbing resin layer or an oxygen-barrier resin layer is provided between the inner layer and the outer layer, and said adhesive intermediate layers are provided neighboring the inner side and the outer side of said gas shut-off intermediate layer.

3. The multilayered structure according to claim 1 or 2,
wherein a phase structure of said adhesive intermediate layer is a sea-island structure with the maleic anhydride-modified olefin resin (B) as the sea, or a bicontinuous phase in which the ethylene/vinyl alcohol copolymer (A) and the maleic anhydride-modified olefin resin (B) are both present as continuous phases.

4. The multilayered structure according to claim 2,
wherein said gas shut-off intermediate layer contains the ethylene/vinyl alcohol copolymer as a base resin material.

5. The multilayered structure according to claim 2,

wherein the inner layer is blended with an odor-trapping agent.

6. The multilayered structure according to claim 2,
wherein the layer constitution from the outer layer toward the inner layer is any one of:

polyolefin layer/regrind layer/adhesive intermediate layer/oxygen-absorbing resin layer/adhesive intermediate layer/deodorant-blended resin layer;
polyolefin layer/adhesive intermediate layer/oxygen-absorbing resin layer/adhesive intermediate layer/regrind layer/deodorant-blended resin layer; or
polyolefin layer/regrind layer/adhesive intermediate layer/oxygen-absorbing resin layer/adhesive intermediate layer/regrind layer/deodorant-blended resin layer.

## Patentansprüche

1. Mehrschichtige Struktur mit einer Haftmittelzwischenschicht aus einer Mischung aus einem Ethylen/Vinylalkohol-Copolymer (A) und einem mit Maleinsäureanhydrid modifizierten Olefinharz (B) zwischen einer inneren Schicht und einer äußeren Schicht, wobei die Haftmittelzwischenschicht das Ethylen/Vinylalkohol-Copolymer (A) und das mit Maleinsäureanhydrid modifizierte Olefinharz (B) in einem Gewichtsverhältnis von 4:6 bis 8:2 enthält und das Ethylen/Vinylalkohol-Copolymer (A) und das mit Maleinsäureanhydrid modifizierte Olefinharz (B) ein durch die nachstehende Formel definiertes Viskositätsverhältnis $\eta AB$,

$$\eta AB = a/b$$

wobei "a" eine Schmelzviskosität des Ethylen/Vinylalkohol-Copolymers (A) bei 200°C und bei einer Scherrate von 200 s$^{-1}$ ist, und "b" eine Schmelzviskosität des mit Maleinsäureanhydrid modifizierten Olefinharzes (B) bei 200°C und bei einer Scherrate von 200 s$^{-1}$ ist,
in einem Bereich von 3 bis 10 aufweisen, und
wobei mindestens entweder die innere Schicht oder die äußere Schicht aus einem Polyolefinharz gebildet ist.

2. Mehrschichtige Struktur nach Anspruch 1, wobei die Haftmittelzwischenschicht aus dem Ethylen-Vinylalkohol-Copolymer (A) und dem mit Maleinsäureanhydrid modifizierten Olefinharz (B) besteht und eine Standardabweichung von nicht weniger als 65 aufweist, wenn ein Kontrastprofil des Ethylen/Vinylalkohol-Copolymers (A) und des mit Maleinsäureanhydrid modifizierten Olefinharzes (B) in der Haftmittelzwischenschicht in der Nähe einer Grenzfläche davon numerisch auf einer rasterelektronenmikroskopischen Aufnahme des Querschnitts der mehrschichtigen Struktur in einer Richtung der Dicke unter Verwendung einer Bildanalysesoftware ausgedrückt wird,
wobei eine Gassperrzwischenschicht, die eine sauerstoffabsorbierende Harzschicht oder eine Sauerstoffsperrharzschicht umfasst, zwischen der inneren Schicht und der äußeren Schicht bereitgestellt ist, und die Haftmittelzwischenschichten benachbart zu der inneren Seite und zu der äußeren Seite der Gassperrzwischenschicht bereitgestellt sind.

3. Mehrschichtige Struktur nach Anspruch 1 oder 2, wobei eine Phasenstruktur der Haftmittelzwischenschicht eine Meer-Inselstruktur mit dem mit Maleinsäureanhydrid modifizierten Olefinharz (B) als das Meer oder eine bikontinuierliche Phase, in der das Ethylen/Vinylalkohol-Copolymer (A) und das mit Maleinsäureanhydrid modifizierte Olefinharz (B) beide als kontinuierliche Phasen vorliegen, ist.

4. Mehrschichtige Struktur nach Anspruch 2, wobei die Gassperrzwischenschicht das Ethylen/Vinylalkohol-Copolymer als Grundharzmaterial enthält.

5. Mehrschichtige Struktur nach Anspruch 2, wobei die innere Schicht mit einem Geruchseinfangmittel vermischt ist.

6. Mehrschichtige Struktur nach Anspruch 2, wobei der Schichtaufbau von der äußeren Schicht zu der inneren Schicht ein beliebiger ist von:

Polyolefinschicht / Regeneratschicht / Haftmittelzwischenschicht / sauerstoffabsorbierende Harzschicht / Haftmittelzwischenschicht / Deodorant-Harzmischschicht;
Polyolefinschicht / Haftmittelzwischenschicht / sauerstoffabsorbierende Harzschicht / Haftmittelzwischenschicht / Regeneratschicht / Deodorant-Harzmischschicht; oder
Polyolefinschicht / Regeneratschicht / Haftmittelzwischenschicht / sauerstoffabsorbierende Harzschicht / Haftmittelzwischenschicht / Regeneratschicht / Deodorant-Harzmischschicht.

**Revendications**

1. Structure multicouche ayant une couche intermédiaire adhésive d'un mélange d'un copolymère éthylène/alcool vinylique (A) et une résine oléfinique modifiée par l'anhydride maléique (B) entre une couche interne et une couche externe, où ladite couche intermédiaire adhésive contient ledit copolymère éthylène/alcool vinylique (A) et la résine oléfinique modifiée par l'anhydride maléique (B) en un rapport pondéral situé dans l'intervalle allant de 4:6 à 8:2, et ledit copolymère éthylène/alcool vinylique (A) et ladite résine oléfinique modifiée par l'anhydride maléique (B) ont un rapport de viscosité $\eta_{AB}$ définit par la formule suivante :

$$\eta_{AB} = a/b$$

où « a » est la viscosité à l'état fondu du copolymère éthylène/alcool vinylique (A) à 200°C et à un taux de cisaillement de 200 s$^{-1}$, et « b » est la viscosité à l'état fondu de la résine oléfinique modifiée par l'anhydride maléique (B) à 200°C et à un taux de cisaillement de 200 s$^{-1}$,
situé dans la plage allant de 3 à 10, et
où au moins l'une parmi la couche interne et la couche externe est formée d'une résine polyoéfinique.

2. Structure multicouche selon la revendication 1, ladite couche intermédiaire adhésive consistant en le copolymère éthylène/alcool vinylique (A) et la résine oléfinique modifiée par l'anhydride maléique (B), et ayant un écart type non inférieur à 65 lorsque le profil de contraste du copolymère éthylène/alcool vinylique (A) et de la résine oléfinique modifiée par l'anhydride maléique (B) dans la couche intermédiaire adhésive près de son interface est exprimée numériquement sur une prise de vue par microscope électronique à balayage de la coupe transversale de la structure multicouche en direction de l'épaisseur en utilisant un logiciel d'analyse d'image,
où une couche intermédiaire d'arrêt des gaz comprenant une couche de résine absorbant l'oxygène ou une couche de résine de barrière à l'oxygène est mise à disposition entre la couche interne et la couche externe, lesdites couches intermédiaires adhésives étant disposées dans le voisinage de la face interne et de la face externe de ladite couche intermédiaire d'arrêt des gaz.

3. Structure multicouche selon la revendication 1 ou 2, où une structure à phases de ladite couche intermédiaire adhésive est une structure mer-îlot avec la résine oléfinique modifiée par l'anhydride maléique (B) en tant que mer, ou une phase bicontinue dans laquelle le copolymère éthylène/alcool vinylique (A) et la résine oléfinique modifiée par l'anhydride maléique (B) sont toutes deux présentes en tant que phases continues.

4. Structure multicouche selon la revendication 2, où ladite couche intermédiaire d'arrêt des gaz contient le copolymère éthylène/alcool vinylique comme matière de résine de base.

5. Structure multicouche selon la revendication 2, où la couche interne est mélangée à un agent piégeant les odeurs.

6. Structure multicouche selon la revendication 2, où la succession des couches de la couche externe vers la couche interne est l'une quelconque parmi :

couche de polyoléfine/couche rebroyée/couche intermédiaire adhésive/couche de résine absorbant l'oxygène/couche intermédiaire adhésive/couche de résine mélangée d'un déodorant ;
couche de polyoléfine/couche intermédiaire adhésive/couche de résine absorbant l'oxygène/ couche intermédiaire adhésive/couche rebroyée/couche de résine mélangée d'un déodorant ; ou
couche de polyoléfine/couche rebroyée/couche intermédiaire adhésive/couche de résine absorbant l'oxygène/couche intermédiaire adhésive/couche rebroyée/couche de résine mélangée d'un déodorant.

Fig. 1

INTERFACE HAS
NO THICKNESS

BRIGHT ↓ ↑ DARK

→ DISTANCE

(a)

INTERFACE HAS
A LARGE THICKNESS

BRIGHT ↓ ↑ DARK

→ DISTANCE

(b)

Fig. 2

( a )

( b )

**EP 2 433 794 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 628593 A
- JP 2007320576 A
- JP 3788442 B